# EUROPÄISCHE PATENTSCHRIFT

(11) **EP 1 468 457 B1**
(45) Veröffentlichungstag und Bekanntmachung des Hinweises auf die Patenterteilung: **01.10.2008**
(21) Anmeldenummer: 02798280.0
(22) Anmeldetag: 19.12.2002
(51) Int. Cl.: H01L 31/045

(54) **MOBILE SOLAR-AKKU-LADESTATION**
MOBILE SOLAR BATTERY CHARGER
STATION DE CHARGEMENT D'ACCUMULATEURS SOLAIRES MOBILE

(30) Priorität: 16.01.2002 DE 20200609 U
(43) Veröffentlichungstag der Anmeldung: 20.10.2004
(73) Patentinhaber: ROBERT BOSCH GMBH, 70442 Stuttgart (DE)
(72) Erfinder: HEIDRICH, Frank, 38114 Braunschweig (DE)
(86) Internationale Anmeldenummer: PCT/DE2002/004658
(87) Internationale Veröffentlichungsnummer: WO 2003/061019

(56) Entgegenhaltungen:
- DE-A- 3 521 216
- DE-U- 29 501 583
- US-A- 5 296 044
- US-A- 5 701 067

## Beschreibung

### Stand der Technik

Es sind mobile Solar-Paneele bekannt, die zur Stromversorgung von Gartenlampen vorgesehen sind, wobei die Gartenlampen als Akkugeräte ausgestaltet sind, die elektrisch mit den Solar-Paneelen verbindbar sind.

Die bekannten Solar-Paneele sind verhältnismäßig sperrig, so daß deren Transport und Aufbewahrung aufwendig und umständlich sind. Das Dokument US 5,296,044 beschreibt ein faltbares Solarzellensystem.

### Vorteile der Erfindung

Die vorliegende Erfindung mit den Merkmalen des Anspruchs 1 hat den Vorteil, daß ein verhältnismäßig großflächiges Solar-Paneel von den großflächigen und sperrigen Abmessungen seiner Funktions-Stellung auf ein geringes Packmaß für den Transport bzw. für die Funktions-Stellung mit minimaler Stromausbeute bringbar ist und dadurch besonders sicher und bequem zu handhaben und mobil ist.

Dadurch, daß das Solar-Paneel aus ventilatorblattartigen Einzelpaneelen besteht, die um eine gemeinsame Schwenkachse fächerartig verdrehbar bzw. auffaltbar sind und die von der aufgefächerten Position in eine kompakte Position zurückfaltbar sind, ist ein einfach aufgebautes, robustes Solar-Paneel geschaffen, das schnell, bequem und sicher transportierbar ist.

Dadurch, daß das Solar-Paneel auf einem Fuß mit Schrägfläche faltbar gelagert ist, ist das Solar-Paneel schnell, bequem und sicher in eine optimale Winkelposition bringbar, in der das Solar-Paneel so zur Sonne ausgerichtet ist, daß die höchstmögliche Stromausbeute gewährleistet ist.

Dadurch, daß das Solar-Paneel auf einem pultartigen Gehäuse befestigt ist, das auf der pultdachartigen Vorderseite das Solar-Paneel trägt und auf der Rückseite einen Griff hat, bildet das Solar-Paneel eine kompakte, besonders handliche, schnell und sicher aufstellbare Box.

Dadurch, daß das Gehäuse auf seiner Rückseite eine Einstecköffnung für die Steckkontakte eines Akku-Pakets, insbesondere für Elektrowerkzeuge, aufweist, ist die Box mit dem Solar-Paneel besonders günstig als mobile, solarbetriebene Akku-Ladestation im Baustellenbetrieb ohne Hochspannungsnetz einsetzbar.

Dadurch, daß das Gehäuse im Inneren eine Ladeelektronik aufweist, die mit den elektrischen Steckkontakten in der Einstecköffnung verbunden sind, ist die Akku-Ladestation besonders robust und unempfindlich gegen Stoß und Schlag bei rauhen Transportbedingungen und hartem Baustelleneinsatz.

Dadurch, daß das Gehäuse eine Ladekontrollanzeige aufweist, ist ein zuverlässiger Einsatz als Akku-Ladestation gewährleistet.

Dadurch, daß die stapelartige angeordneten Solarzell-Platten über elektrische Schleifkontakte miteinander und mit den Elektrokontakten der Stecköffnung elektrisch gekoppelt sind, hat das Solar-Paneel eine effektive Maximalgröße, die sich aus der Summe der Einzelflächen der aufgefalteten Solarzell-Platten ergibt.

Dadurch, daß das Gehäuse der Solar-Akku-Ladestation Lüftungsschlitze trägt, ist eine Überhitzung der im Inneren angeordneten Elektro- und Elektronikteile, insbesondere der Ladeelektronik, auch bei hohen Außentemperaturen ausgeschlossen.

### Zeichnung

Nachstehend ist die vorliegende Erfindung anhand eines Ausführungsbeispiels mit zugehöriger Zeichnung näher erläutert.

Es zeigen
Figur 1 eine räumliche Seitenansicht der Solar-Akku-Ladestation,
Figur 2 die Solar-Akku-Ladestation von links,
Figur 3 die Solar-Akku-Ladestation von hinten,
Figur 4 die Solar-Akku-Ladestation von unten und
Figur 5 die Ansicht der Solar-Akku-Ladestation von vorn mit fächerförmig entfalteten Solarzell-Platten.

### Ausführungsbeispiel

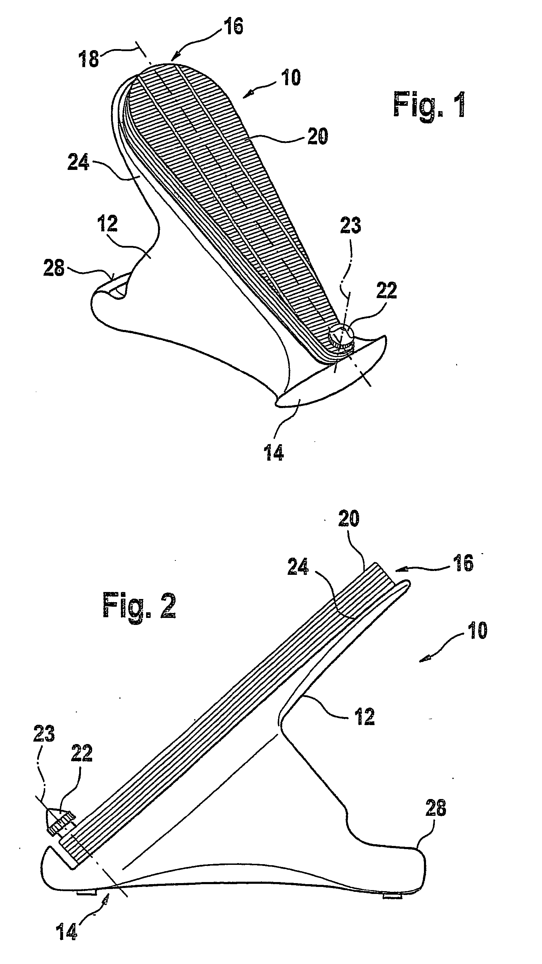

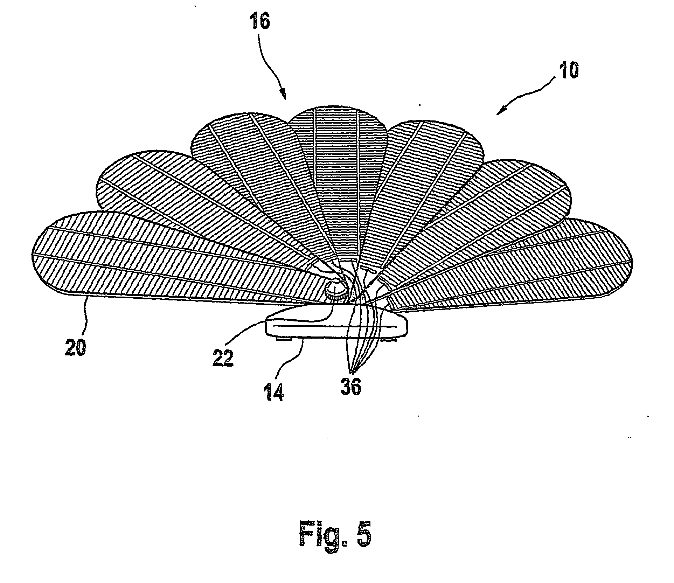

Figur 1 zeigt die räumliche Darstellung der Solar-Akku-Ladestation mit auf Kompaktformat gefaltetem Stapel 16 von Solarzell-Platten 20, von denen die oberste Solarzell-Platte frei liegt und durch Licht aktivierbar ist und ebenso wie die übrigen Solarzell-Platten um einen Gelenkzapfen 22 schwenkbar gelagert ist. Die einzelnen Solarzell-Platten 20 sind unabhängig voneinander aber elektrisch miteinander verbunden um den Gelenkzapfen 22 bewegbar. Sie haben identische Abmessungen und sind so bemessen, daß nach Entfalten durch Schwenken um den Gelenkzapfen 22 gemäß Figur 5 eine halbkreisförmige Solar-Paneelfläche gebildet wird, die einfallendes Sonnenlicht flächenproportional in elektrischen Strom umwandelt.

Der Stapel 16 der Solarzell-Platten 20 ist auf einer pultdachartigen Schrägfläche 24 des Gehäuses 12 angeordnet, das mit seinem Fuß 14 auf beliebigem Untergrund sicher auf stellbar ist.

Zum Entfalten ist die oberste Solarzell-Platte 20 relativ zur Symmetrieachse 18 ganz nach rechts oder links zu verschwenken, wobei dann die übrigen, sich axial an die oberste anschließenden Solarzell-Platten 20 nach links oder rechts "aufgefächert" werden, um einen Halbkreis zu beschreiben. Im Inneren des Gehäuses 12 sind nichtdargestellte, in Verbindung mit Akku-Ladegeräten übliche elektrische Verbindungsmittel und Elektronikelemente enthalten. Das Gehäuse 12 weist auf seiner Rückseite einen Tragegriff 28 auf, der als Spatenhandgriff ausgestaltet ist.

Figur 2 läßt die zuvor zu Figur 1 erläuterten Einzelheiten erkennen, ohne daß diese insgesamt nochmals wiederholt werden sollen. Verdeutlicht wird durch Figur 2 die Anordnung der Schwenkachse 23 bzw. des Gelenkzapfens 22. Außerdem ist erkennbar, daß der Stapel 16 aus sieben einzelnen gleichartig ausgestalteten Solarzell-Platten 20 besteht.

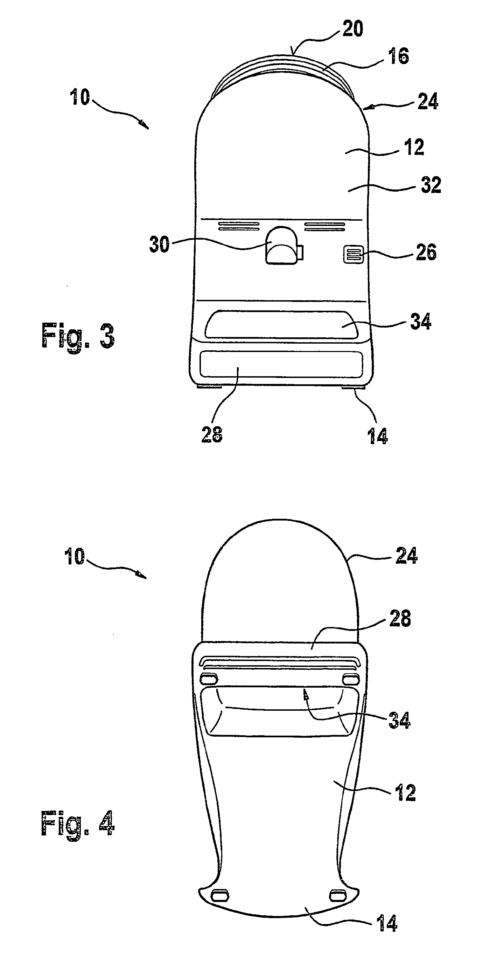

Figur 3 zeigt die Rückseite der Solar-Akku-Ladestation 10, wobei die Rückseite der Schrägfläche 24 bzw. des Gehäuses 12 und die Ausgestaltung des Handgriffs 28 erkennbar ist, wobei darüberhinaus eine Einstecköffnung 30 zum Einschub des Steckterminals eines Akku-Pakets erkennbar ist, wie sie für Akku-Handwerkzeugmaschinen verwendet werden. Außerdem sind Lüftungsschlitze 32 sowie eine Ladekontrollanzeige 26 erkennbar, die bei eingestecktem Akku-Paket über dessen Ladezustand informieren.

Figur 4 zeigt die Unterseite der Solar-Akku Ladestation, wobei die Ausgestaltung des Handgriffs 28 mit Durchgriffsöffnung 34 deutlich wird.

Figur 5 zeigt die Vorderansicht der Solar-Akku-Ladestation 10, wobei neben den zuvor erläuterten Einzelheiten ohne deren Wiederholung besonders die fächerartig entfaltete Anordnung der sieben elektrisch miteinander verbundenen Solarzell-Platten 20 erkennbar ist.

Darüber hinaus ist an jeder Solarzell-Platte nahe dem Gelenkzapfen 22 je ein Schleifringkontakt 36 erkennbar, über den die einzelnen Solarzell-Platten kettengliedartig miteinander elektrisch gekoppelt sind. Dadurch ist eine Reihenschaltung der einzelnen Solarzell-Platten gebildet, so daß an der Stecköffnung bzw. dem Ladeterminal für Akku-Packs ein Ladestrom zur Verfügung steht, dessen Größe proportional zur Gesamtfläche aller sieben Solarzell-Platten ist.

Ist die Solar-Akku-Ladestation gemäß Figur 1 zusammengefaltet, so ist nur ein minimaler Ladestrom vorhanden, der proportional der Fläche der oberen Solarzell-Platte 20 ist.

Die Solarzell-Platten 20 tragen auf ihrer Vorderseite bzw. oben eine lichtumwandelnde Schicht, die in einem gemeinsamen elektrischen Kontaktpunkt mündet Die aus mechanisch stabilem Trägermaterial bestehende Rückseite ist durch einen Luftspalt zur benachbarten Solarzell-Platte 20 beabstandet, so daß dadurch beim Auseinander- bzw. Zusammenfalten des Stapels 16 ein Zerkratzen der lichtumwandelnden Schicht vermieden wird.

Der elektrisch Kontaktpunkt ist am unteren Ende jeder Solarzell-Platte 20 angeordnet und bildet dort jeweils einen Schleifringkontakt 36. Dieser ist auf der Vorderseite kreisbogenartig als Kulisse und auf der Rückseite als elektrisch leitender Vorsprung ausgestaltet. So greift jeder Vorsprung einer Solarzell-Platte 20 in die kreisbogenartige Kulisse einer im Stapel 16 benachbarten daruntet angeordneten Solarzell-Platte 20.

## Patentansprüche

1. Solarzell-Platte zur Erzeugung elektrischen Stroms, wobei sie aus mehreren, relativ zueinander zu einem kleinen Packmaß bewegbaren einzelnen Solarzell-Platten (20) besteht, die um einen gemeinsamen Schwenkachse (23) schwenkbar ist, so dass die Vielzahl einzelner Solarzell-Platten (20) fächerartig auseinander oder zurück in ihre Packposition faltbar sind, wobei die einzelnen Solarzeli-Platten (20) ein kleines Packmaß bilden, während sie in der auseinandergefalteten Position eine Maximalfläche bilden, wobei die Solarzell-Platten (20) auf einem pultartigen Gehäuse (12) sitzen, das im wesentlichen die Kontur einer einzelnen Solarzell-Platte (20) hat und das eine optimale Winkelposition der Solarzell-Platten (20) zur Sonne sichert, wobei das Gehäuse (12) innen hohl ist und als Akku-Ladestation dient und auf seiner Rückseite Steckmittel, insbesondere eine Einstecköffnung (30), mit elektrischen Kontaktstiften zur Aufnahme eines Akku-Steckterminals, insbesondere für Akku-Elektrohandwerkzeuge, aufweist

2. Solarzell-Platte nach Anspruch 1, **dadurch gekennzeichnet, dass** mehrere Solarzell-Platten (20) einen Stapel (16) bilden und auseinanderfaltbar angeordnet sind, wobei die Vorderseite jeder Solarzell-Platte (20) eine lichtumwandelnde Schicht mit einem gemeinsamen elektrischen Kontaktpunkt trägt und wobei die aus mechanisch stabilem Trägermaterials bestehende Rückseite durch einen Luftspalt zur benachbarten Solarzell-Platte (20) beabstandet ist.

3. Solarzell-Platte nach Anspruch 1 oder 2, **dadurch gekennzeichnet, dass** der aus länglichen Solarzell-Platten (20) gebildete Stapel (16) an einem Ende eine Schwenkachse (23) hat, um die die einzelnen Solarzell-Platten, insbesondere kettenartig miteinander verbunden, relativ zueinander verschwenkbar gelagert sind.

4. Solarzell-Platte nach einem der vorhergehenden Ansprüche, **dadurch gekennzeichnet, dass** die einzelnen Solarzell-Platten (20) des Stapels (16) miteinander in elektrischem Verbund stehen, insbesondere mittels Schleifringen (36).

5. Solarzell-Platte nach einem der vorhergehenden Ansprüche, **dadurch gekennzeichnet, dass** das Gehäuse (12) einen, insbesondere als Spatengriff ausgestalteten, Traggriff (28) aufweist.

6. Solarzell-Platte nach einem der vorhergehenden Ansprüche, **dadurch gekennzeichnet, dass** das Gehäuse (12) eine Lade-/Entladesteuerung aufweist, die den elektrischen Kontakten der Stecköffnung für Akku-Packs zugeordnet ist

7. Solarzell-Platte nach einem der vorhergehenden Ansprüche, **dadurch gekennzeichnet, dass** das Gehäuse (12) eine Lade-Kontrollanzeige (26) zur Überwachung in der Stecköffnung (30) positionierter Akku-Packs aufweist.

8. Solarzell-Platte nach einem der vorhergehenden Ansprüche, **dadurch gekennzeichnet, dass** die obere Solarzell-Platte (20) im zusammengefalteten Plattenstapel (16) aktiv ist und einen flächenproportionalen Ladestrom liefert.

9. Solarzell-Platte nach einem der vorhergehenden Ansprüche, **dadurch gekennzeichnet, dass** bei entfaltetem Stapel (16) von den Solarzell-Platten (20) ein Strom erzeugt wird, dessen Stärke proportional der Gesamtfläche der Solarzell-Platten ist.

## Claims

1. Solar cell panel for generating electrical current, with it comprising a plurality of individual solar cell panels (20), which are capable of moving relative to one another to form a small pack size and are capable of swivelling about a common swivel axis (23), with the result that the large number of individual solar cell panels (20) can be unfolded in the manner of a fan or folded back into their packed position, the individual solar cell panels (20) forming a small pack size, while they form a maximum area in the unfolded position, the solar cell panels (20) resting on a stand-like housing (12), which has substantially the contour of an individual solar cell panel (20) and which ensures an optimum angular position of the solar cell panels (20) with respect to the sun, the housing (12) being hollow on the inside and acting as a rechargeable battery charger and having, on its rear side, plug-type means, in particular a plug-in opening (30), with electrical contact pins for receiving a rechargeable battery plug-type terminal, in particular for rechargeable electric hand tools.

2. Solar cell panel according to Claim 1, **characterized in that** a plurality of solar cell panels (20) form a stack (16) and are arranged in such a way that they can be unfolded, the front side of each solar cell panel (20) bearing a light-converting layer with a common electrical contact point, and the rear side, which is made from a mechanically stable substrate material, being spaced apart from the adjacent solar cell panel (20) by an air gap.

3. Solar cell panel according to Claim 1 or 2, **characterized in that** the stack (16) formed from elongate solar cell panels (20) has a swivel axis (23) at one end about which the individual solar cell panels, in particular connected to one another in concatenated fashion, are mounted in such a way that they are capable of swivelling relative to one another.

4. Solar cell panel according to one of the preceding claims, **characterized in that** the individual solar cell panels (20) of the stack (16) are electrically connected to one another, in particular by means of sliprings (36).

5. Solar cell panel according to one of the preceding claims, **characterized in that** the housing (12) has a carry handle (28), which is in particular in the form of a spade-like handle.

6. Solar cell panel according to one of the preceding claims, **characterized in that** the housing (12) has a charge/discharge controller, which is associated with the electrical contacts of the plug-in opening for rechargeable battery packs.

7. Solar cell panel according to one of the preceding claims, **characterized in that** the housing (12) has a charge check display (26) for monitoring rechargeable battery packs positioned in the plug-in opening (30).

8. Solar cell panel according to one of the preceding claims, **characterized in that** the upper solar cell panel (20) is active when the panel stack (16) is folded together and produces a charge current proportional to the area.

9. Solar cell panel according to one of the preceding claims, **characterized in that**, when the stack (16) of the solar cell panels (20) is unfolded, a current is generated whose intensity is proportional to the total area of the solar cell panels.

## Revendications

1. Plaque à cellules solaires pour générer un courant électrique, cette plaque se composant de plusieurs plaques individuelles de cellules solaires (20), mobiles l'une par rapport à l'autre pour être regroupées dans un encombrement de dimensions réduites, ces plaques pivotant autour d'un axe de pivotement (23) commun de façon que les différentes plaques de cellules solaires (20) puissent être déployées en éventail ou être repliées dans leur position de rangement, les différentes plaques de cellules solaires (20) constituant un paquet de petites dimensions alors qu'en position déployée, elles forment une surface maximale, les plaques à cellules solaires (20) étant portées par un boîtier (12) en forme de lutrin qui a pratiquement le contour d'une seule plaque à cellules solaires (20), et assure une position angulaire optimale des plaques à cellules solaires (20) par rapport au soleil,
le boîtier (12) est creux à l'intérieur et sert de station de chargement d'accumulateur et sur le côté arrière il comporte des moyens d'enfichage notamment un orifice d'enfichage (30) avec des broches de contacts électriques pour recevoir un connecteur d'accumulateur et en particulier un accumulateur pour un outil électrique à main.

2. Plaque à cellules solaires selon la revendication 1,
**caractérisée en ce que**
plusieurs plaques à cellules solaires (20) constituent une pile (16) et peuvent être déployées, la face avant de chaque plaque à cellules solaires (20) ayant une couche de conversion optique avec un point de contact électrique commun et le dos, formé d'une matière de support mécaniquement stable, est écarté de la plaque à cellules solaires (20) voisine par un intervalle d'air.

3. Plaque à cellules solaires selon la revendication 1 ou 2,
**caractérisée en ce que**
la pile (16) formée de plaques à cellules solaires (20), allongées, possède à une extrémité, un axe de pivotement (23) pour relier les différentes plaques à cellules solaires distinctes, notamment en forme de chaîne, les unes par rapport aux autres, de façon à pouvoir pivoter.

4. Plaque à cellules solaires selon les revendications précédentes,
**caractérisée en ce que**
les différentes plaques à cellules solaires (20) de la pile (16) sont reliées électriquement notamment par l'intermédiaire de bagues de glisssement (36).

5. Plaque à cellules solaires selon les revendications précédentes,
**caractérisée en ce que**
le boîtier (12) comporte une poignée (28) en particulier une poignée de pelle.

6. Plaque à cellules solaires selon les revendications précédentes,
**caractérisée en ce que**
le boîtier (12) comporte une commande de charge/décharge associée aux contacts électriques des orifices d'enfichage du paquet constitué par l'accumulateur.

7. Plaque à cellules solaires selon les revendications précédentes,
**caractérisée en ce que**
le boîtier (12) comporte un affichage de contrôle de charge (26) pour surveiller l'accumulateur en forme de paquet placé dans l'orifice d'enfichage (30).

8. Plaque à cellules solaires selon les revendications précédentes,
**caractérisée en ce que**
la plaque à cellules solaires (20), supérieure, est active lorsque la pile de plaques (16) est repliée et elle fournit un courant de charge proportionnel à sa surface.

9. Plaque à cellules solaires selon les revendications précédentes,
**caractérisée en ce que**
lorsque la pile (16) est déployée, les plaques à cellules solaires (20) génèrent un courant dont l'intensité est proportionnelle à leur surface totale.
